(19) Europäisches Patentamt / European Patent Office / Office européen des brevets

(11) **EP 3 842 966 B1**

(12) **EUROPEAN PATENT SPECIFICATION**

(45) Date of publication and mention
of the grant of the patent:
**04.06.2025  Bulletin 2025/23**

(21) Application number: **19924312.2**

(22) Date of filing: **10.04.2019**

(51) International Patent Classification (IPC):
*H04L 9/40* (2022.01)    *G06F 21/31* (2013.01)
*G06F 21/30* (2013.01)   *G06N 20/20* (2019.01)
*H04W 12/06* (2021.01)

(52) Cooperative Patent Classification (CPC):
**G06F 21/316; G06F 21/30; G06N 20/20;
H04L 63/08; H04W 12/06;** G06N 5/01; G06N 20/10

(86) International application number:
**PCT/RU2019/000232**

(87) International publication number:
**WO 2020/209744 (15.10.2020 Gazette 2020/42)**

(54) **IDENTIFYING A USER FROM THE SEQUENCE OF WINDOWS OPENED ON A USER INTERFACE**

IDENTIFIZIERUNG EINES BENUTZERS AUS DER SEQUENZ VON AUF EINER
BENUTZERSCHNITTSTELLE GEÖFFNETEN FENSTERN

IDENTIFICATION D'UN UTILISATEUR EN FONCTION D'UNE SÉQUENCE DE FENÊTRES
OUVERTES D'UNE INTERFACE D'UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.06.2021  Bulletin 2021/26**

(73) Proprietor: **F.A.C.C.T. Antifraud LLC
Moscow, 115088 (RU)**

(72) Inventor: **SLIPENCHUK, Pavel Vladimirovich
Moscow, 117437 (RU)**

(74) Representative: **De Vries & Metman
Overschiestraat 180
1062 XK Amsterdam (NL)**

(56) References cited:
CN-A- 108 510 280      RU-C2- 2 649 793
US-A1- 2002 112 048    US-A1- 2008 222 712
US-A1- 2017 032 250    US-A1- 2017 221 064
US-B1- 9 185 095

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

This technical solution relates to the field of computing, in particular, to a method and system of user identification by sequence of opened user interface windows.

BACKGROUND

The object of protecting information from unauthorized access is becoming increasingly important. One of the methods of unauthorized access to other people's funds, actively used by violators, involves obtaining user credentials (usually a login and password) and then connecting to a protected resource using these credentials. Wherein, regardless of the scenario used to gain access to the credentials (use of keyloggers, remote connection to a computer, theft of a mobile device not protected by password, as well as other methods, as well as their various combinations) in terms of access control, the violator's actions are indistinguishable from the actions of a legitimate user, under whose credentials the violator entered the system.

From the prior art there are known solutions that describe the identification of the user on behavioral analysis: US2017032250A1, publ. 02.02.2017; CN106355450A, publ. 25.01.2017; CN106202482A, publ. 07.12.2016.

In addition, from the prior art there is known the solution RU2649793C1, describing how to detect the remote connection of the violator to the computer of a legitimate user based on the analysis of time intervals corresponding to the movements of the mouse cursor.

However, solutions known from the prior art have limited functionality. In particular, the solution described in RU2649793C1 is not able to detect a violator who does not use the remote access program. Many other known solutions for implementation require a significant amount of data previously marked by humans. Document US 2017/221064 discloses identifying a user by determining a unique user-specific page navigation sequence and time parameters using machinelearning techniques. Document CN 108 510 280 discloses determining user behavior habits in page browsing order based on time parameters using neural network for data training. Document US 9 185 095 discloses behavioral profiling to authenticate a user based on behavioral characteristics observed during current session and a profile previously developed based on prior usage pattern.

The claimed method of identifying a violator who uses one's credentials to access the service, providing for authorization and access control, has no restrictions on the script used by the violator to gain access to the legitimate account and does not require manual marking of data used for preliminary training of the system.

SUMMARY

The invention is defined by the appended claims. The technical problem that the claimed technical solution addresses is the creation of a computer-implemented method and system of user identification by sequence of opened user interface windows, which are described in the independent claims. Additional embodiments of this technique are presented in the dependent claims of the technique.

The technical result consists in the automatic user identification by sequence of opened user interface windows.

In a preferred embodiment, a computer-implemented method of user identification by sequence of opened user interface windows is claimed, consisting in performing steps in which the following is accomplished using a computing device:

- registering user credentials in the system;
- assigning an appropriate credential user ID;
- assigning an identifier to each user interface window opened by user;
- throughout the working session of the identified user, recording sequence of opened user interface windows, wherein:

  • saving identifier of window, which is currently opened by the user, and opening time of window;
  • with each transition to a new user interface window, saving identifier of this window and time when it was open;

- accumulating a pre-set number of working sessions of the user;
- analyzing the accumulated data, notably, identifying the repeating sequences of the visited user interface windows (patterns);
- calculating a set of parameters characterizing the time elapsed between the transitions of a given user from one user interface window to another user interface window for each identified pattern;
- saving the specified number of patterns of a given user and, on the basis of the set of parameters calculated for each pattern, training at least one classifier to identify a given user by the sequence of visited pages;

- applying at least one classifier, that was trained, to further confirm the identity of the user, during the working sessions of which at least one classifier was trained, characterized in that the set of parameters calculated for each pattern includes the time elapsed between the transitions of a given user from one user interface window to another user interface window and averaged over all working sessions of the given user in which this pattern is encountered, wherein the averaged time elapsed is calculated as a weighted average, and wherein a number of pages separating the interval from the initial interval or the final interval of the pattern is taken as the weight for each time period.

In the particular embodiment the user interface windows are web pages.

In another particular embodiment, the identified patterns are additionally selected such that their length and number satisfy the pre-set criteria, and the sets of parameters are calculated only for the selected patterns.

In another particular embodiment, patterns with the maximum possible length are selected, and their number should be no more and no less than pre-set values.

In another particular embodiment, patterns comprising pre-defined user interface windows can be assigned with a priori weights which are taken into account when choosing or training at least one classifier such that the corresponding patterns exerted a proportionally greater or lesser effect on the final decision of at least one classifier.

In another particular embodiment, a set of parameters calculated for each pattern includes the time elapsed between the transitions of a given user from one user interface window to another user interface window and averaged over all working sessions of the given user in which this pattern is encountered.

In another particular embodiment, a set of parameters calculated for each pattern further includes the dispersion, calculated as the variance, for the time intervals between the transitions of the given user from one user interface window to another user interface window.

In another particular embodiment, a set of parameters calculated for each pattern further includes the frequency of this pattern in the working sessions of the given user.

In another particular embodiment, the frequency is taken into account when choosing or training at least one classifier such that patterns with a higher frequency exerted a proportionally greater effect on the final decision of at least one classifier.

In another particular embodiment, the classifier is trained by the method of machine learning.

In another particular embodiment, the classifier can be implemented as a probabilistic graphical model or as an SVM classifier.

The claimed solution is also implemented by means of the system of user identification by sequence of visited user interface windows, comprising:

- unit for registration of user credentials in the system;

- system clock, by which it is possible to tag time;

- unit for identification of the current user interface window;

- long-term memory, by which it is possible to store the database;

- computing device configured to perform the said method.

In one of the possible embodiments, the claimed solution is an integral part of a remote banking service system.

In another possible embodiment, the claimed solution is an integral part of a website, which involves user authorization.

In another of the possible embodiments, the user identification system is an integral part of a multiplayer computer game, which involves user authorization.

In another of the possible embodiments, the user identification system is an integral part of a software and hardware system for collaboration, which involves user authorization.

DESCRIPTION OF THE DRAWINGS

Embodiment of the technique will be described hereinafter in accordance with the accompanying drawings, which are presented to explain the essence of the technique and in no way limit the scope of the technique. The following drawings are accompanying the application:

Fig. 1 illustrates a computer-implemented method of user identification by sequence of opened user interface windows;

Fig. 2 illustrates an example of an overall schematic of a computer device.

DETAILED DESCRIPTION

The following detailed description of the technique embodiment provides numerous embodiment details designed to provide a clear understanding of this technique. However, it will be obvious to those skilled in the art how to use this technique, with or without these embodiment details. In other cases, well-known methods, procedures, and components have not been described in detail in order not to obscure the features of this technique.

In addition, it will be clear from the foregoing that the technique is not limited to the said embodiment. Numerous possible modifications, changes, variations and substitutions that preserve the essence and form of this technique will be obvious to those skilled in the art.

This technique is designed to provide a computer-implemented method and system of user identification by sequence of opened user interface windows.

The method will be described using the example of the remote banking service (RBS) system, however, this example is non-limiting. In addition to the RBS system, an example of which will describe the method, the claimed method can also be implemented in online computer games, collaboration software, online store software, etc.

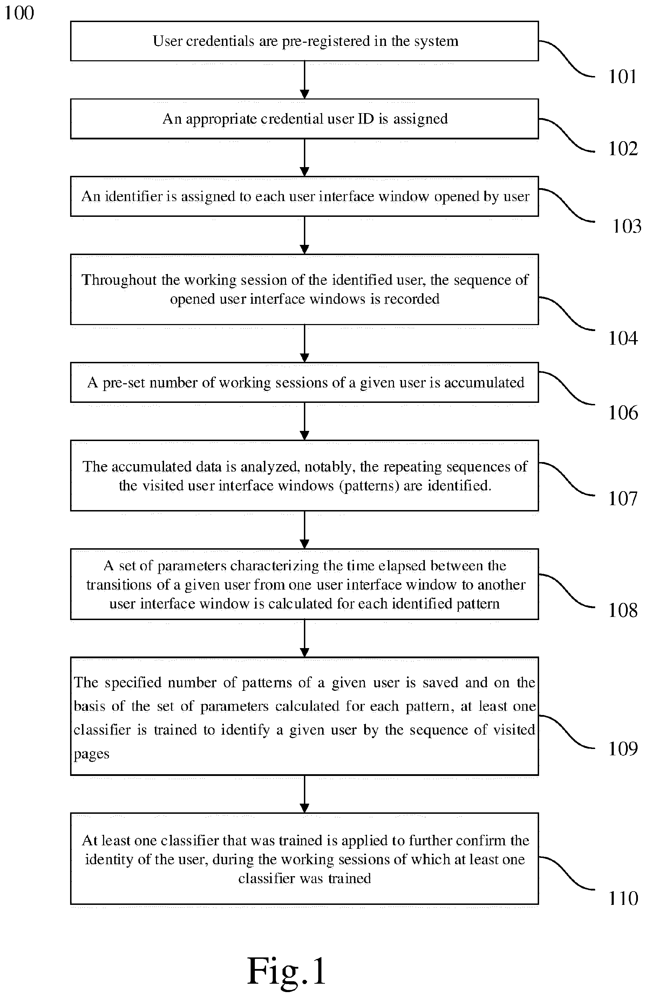

As represented in Fig. 1, the claimed computer-implemented method of user identification by sequence of opened user interface windows (100) is implemented as follows:

At step (101), user credentials are pre-registered in the system. User credentials are username and password. This is an important component of network security.

Next, at step (102), an appropriate credential user ID is assigned.

At step (103), an identifier is assigned to each user interface window opened by user;

At step (104), throughout the working session of the identified user, the sequence of opened user interface windows is recorded, while:

• saving identifier of window, which is currently opened by the user, and opening time of window;

• with each transition to a new user interface window, the identifier of this window and the time when it was open are saved.

At step (106), a pre-set number of working sessions of a given user is accumulated, and at step (107), the accumulated data is analyzed, notably, the repeating sequences of the visited user interface windows (patterns) are identified.

At the same time, at step (108), a set of parameters characterizing the time elapsed between the transitions of a given user from one user interface window to another user interface window is calculated for each identified pattern.

Whereafter, at the stage (109), the specified number of patterns of a given user is saved and on the basis of the set of parameters calculated for each pattern, at least one classifier is trained to identify a given user by the sequence of visited pages;

And at step (110), at least one classifier that was trained is applied to further confirm the identity of the user, during the working sessions of which at least one classifier was trained.

The claimed method can be implemented in any embodiment of the authorized remote access service, which implies the presence of several user interface windows or the presence of several working zones in one complex user interface window and various possible methods to switch between them (both windows and zones).

The following technical embodiments are given for example and are non-limiting either.

In one technical embodiment, the method can be implemented in the form of an Internet program (script), functioning on the website of the bank providing the RBS service.

In another technical embodiment, the method can be implemented as a subsystem of the "thin client" of RBS, for example, an Internet application that runs on the user mobile device: a smartphone, mobile phone, etc., and exchanges data wirelessly with the server the bank on which the RBS system is installed and operates.

In yet another technical embodiment, the method can be implemented as a subsystem of a software and hardware complex operating in the "cloud" and exchanging data via wireless and wired channels with "thin clients", ATMs and with the processing center of the bank.

It is also possible to embody the claimed method in the form of a distributed software and hardware system located on different Internet servers, for example, for the purpose of load distribution, and simultaneously serving multiple RBS channels belonging to different banks.

In yet another embodiment, the method can be implemented as part of a program or service for collaboration, which involves authorized user access (for such programs or services, see https://ru.wikipedia.org/w/index.php?title=%D0%9F%D1%80%D0%BE%D0%B3%D1%80%D0%B 0%D0%BC%D0%BC%D0%BD%D0%BE%D0%B5 %D0%BE%D0%B1%D0%B5%D1%81%D0%BF%D0 %B5%D1%87%D0%B5%D0%BD%D0%B8%D0%B5 %D1%81%D0%BE%D0%B2%D0%BC%D0%B5 %D1%81%D1%82%D0%BD%D0%BE%D0%B9 %D1%80%D0%B0%D0%B1%D0%BE%D1%82%D1 %8B&oldid=80620207 ). In yet another possible embodiment, the claimed method can be implemented as part of a multiplayer computer game, involving the authorization of users.

Regardless of the technical embodiment of the claimed method, it is necessary to obtain two identifiers for its implementation: the user identifier (ID) and the identifier of the current user interface window.

User ID is at least one combination of characters that uniquely characterizes a particular user. For example, the identifier can be a hash function from the phone number of the mobile device from which the RBS System is accessed. In another embodiment, it can be agent_id (internal client identifier used in the banking system). In yet another embodiment, this can be a bank card number, read by an ATM, or the result of a biometric identification of the cardholder or a hash function of such a result.

It is possible that the identifier is a function of a set of information about the software and hardware configuration of the personal computer from which the RBS System is accessed.

It is also possible embodiment of the claimed method in which the user ID is generated by the system that implements the method, based on one or more identifiers of a similar purpose, received from the banking system. The generation of such a unique identifier can be performed in any well-known method, for example, by hashing a character string obtained by concatenating identifiers obtained from the banking system.

As a rule, the user ID is somehow encrypted on the bank side; its decoding is not required for the implementation of the claimed method, and the way in which it was generated is irrelevant. It is sufficient that this identifier is unique and consistently reproducible during each session of accessing the RBS System using the credentials (login and password) of the particular account.

Hereafter, for simplicity, we will designate the user ID as USER(i), where different values of i indicate different users.

The identifier of the current user interface window is at least one combination of characters that uniquely corresponds to the user interface window that is currently opened by the user.

This window can be a web site page, and then the identifier can be, for example, a hash from the URL of this page or from its title (a sequence of characters placed under the <title> tag). In another embodiment, this window can be an interface element of a program running on a mobile device or in an ATM, and then the identifier can be a hash of the name of this interface element or its another designation used in the program.

It is sufficient for the purposes of the implementation of the claimed method that this identifier is unique within the framework of this RBS system and consistently reproducible with each successful act of accessing a specific interface window.

It is also possible embodiment of the claimed method in which the current window identifier is generated by the system that implements the method, based on one or more window identifiers, received from the banking system. The generation of such a unique identifier can be performed in any well-known method, for example, by hashing a character string obtained by concatenating identifiers received from the banking system.

In an embodiment of the method, which involves the presence of one complex user interface window that has several working areas, the input focus can serve as the "current window identifier", https://ru.wikipedia.org/w/index.php?title=%D0%A4%D0%BE%D0%BA%D1%83%D1%81 (%D0 %BF%D0%BE% D0%BB%D1%8C%D0%B7%D0%BE%D0%B2%D0%B0%D1%82%D0%B5%D0%BB% D1%8C%D1%81%D0% BA%D0%B8%D0%B9 %D0%B8%D0%BD%D1%82%D0%B5%D1%80%D1%8 4%D0%B5%D0%B9%D1%81) &stable=1, i.e. some sequence of service characters generated by the program, which owns a complex window, and carrying information about which of the numerous interface elements of the program (buttons, pop-up lists, radio buttons, text input windows, etc.) is currently active and ready to take user commands.

Conversion of such a sequence into a unified identifier of a place in the RBS user interface can be performed, for example, by taking a hash function from the sequence of characters itself or by any other well-known method.

Hereafter we will designate the identifier of the current window as PAGE(j), wherein a different j value points to the different user interface windows or the different user interface elements in a single window.

To implement the claimed method in the form of a distributed software and hardware system located on different Internet servers and serving simultaneously multiple RBS channels belonging to different banks, it will also be necessary to collect and process an additional identifier indicating from which bank system did one or other USER(i); PAGE (j) identifiers came.

This additional identifier - let us designate it as BANK(q) - is static, it is created only once, when you configure and run the RBS system of this bank. Technically, it can be, for example, an SSL certificate that subscribes the sites of this bank, or a separate character string, for example, BANK(q)=SBERBANK, transferred from each bank's RBS. BANK(q) identifier is used for the primary sorting of information received by the system and for addressing the response signals of the system to the bank antifraud department.

Bank's BANK(q) identifier does not perform the other functions besides these that are obvious and that permit implementation by any well-known method, therefore we omit this identifier in the following description for the sake of simplicity.

USER(i); PAGE(j) identifiers come from the RBS system always in pairs and simultaneously, each accompanied by a timestamp. In fact, it may take some time between the receipt of the first and second identifiers, due to signal delays in the physical communication lines used by the RBS system, but we neglect this time within the scope of the implementation of the claimed method, considering the receipt time of the last one of the identifiers to be the receipt time of the identifiers.

A data sequence that is given by the following expression, within the scope of this description shall be called the term session (S) or, which is the same, a working session of a given user:

$$S=\{USER(i); PAGE(1); t_1\}, \{USER(i); PAGE(2), t_2\}, ...\{USER(i); PAGE(N), t_N\} \qquad (1)$$

wherein $t_1$ - the timestamp corresponding to the opening time of the PAGE(1) window by the USER(i) user, $t_2$ - the timestamp corresponding to the opening time of the PAGE(2) window by the same user, and so on.

It is important that the session is a sequence of pairs of identifiers, wherein the user ID in each pair is the same, i.e. a session is always associated with a specific user and fully describes one session of his work with the RBS system.

In general, a significant number of sessions exist at the same time in the RBS system, since many different users can work simultaneously with the RBS system. A common practice in banks is to record (save) all sessions and store this information for a considerable time (from several months to several years). In one of the possible embodiments of the claimed method, this array of information can be obtained from the bank and used for preliminary training of the system implementing the method.

Obviously, in the data array that covers a fairly long time period (for example, a month), along with sessions of legitimate users, there will also be sessions of violators. However, it is known that the frequency of access of violators to the RBS system is extremely negligible. Legitimate sessions constitute the absolute majority of sessions stored over a long period of time.

Since the system training is essentially an accumulation and statistical analysis of information, the presence of a small number of illegitimate sessions will not affect the quality and results of training.

The system that implements the method sorts the data coming from the RBS system or from the training array of information, according to USER(i), and forms user sessions. Each pair of USER(i); PAGE(j) identifiers, as shown in (1), is characterized by the receipt time recorded by storing the timestamp t. Therefore, for each pair, except for the very first pair in each session, the time interval T between the moment of receipt of this pair and the moment of receipt of the previous pair can be calculated. This interval can be calculated as a difference of timestamps (t) calculated with a given accuracy, for example, with an accuracy of 0.01 seconds. For example, the interval between the first and second pairs of identifiers in each working session of a given user is calculated as $T = t_2 - t_1$, etc.

The calculated intervals are saved for use in further calculations.

The sequence of data (1), recorded for one specific USER(i) user, after calculating the time intervals T will be written as:

$$PAGE(j) -- T(j) -- PAGE(j+1) -- T(j+1) -- PAGE(j+2) -- T(j+2) -- ... -- Tn-1 -- PAGE(j+N); (2)$$

wherein $T(j)$ -- the time in seconds and fractions of a second (not necessarily integer) that elapsed between the moment when the user opened the PAGE(j) window and the moment when the same user opened the PAGE(j+1) window.

It should be noted that between the PAGE(j), PAGE(j+1) windows themselves (for example, web pages) in the RBS system there can be no connection at all, no logical one, for example, a request expressed in a text message to go to a certain page, no physical one, i.e. hyperlinks leading from one page to another. Such transitions are formed in the sessions of bots, i.e. programs that simulate a particular activity of RBS users.

Moreover, for the operation of the system implementing this method, it does not matter what the PAGE(j) and PAGE(j+1) windows of the user interface are. They are necessary only in the context of the fact that the user authorized under the USER(i) user account first opened the PAGE(j) window, and after some calculated time - the PAGE(j+1) window.

Thus, for each USER(i), a collection of sessions (working sessions of a given user) is formed, which has the following form (the window numbers and the duration of the intervals between them are randomly selected in this example):

S1= **PAGE(5)** - 8 - **PAGE(9)** - 51- ... - PAGE(2) -6- PAGE(6) - 4 - PAGE(33) - 12 - PAGE(21) S2= PAGE(8) - 88 - PAGE(35) - ... - PAGE(6) - 5 - PAGE(33) - 10 - PAGE(21) -31- PAGE(2) S3= PAGE(6) - 4 - PAGE(33) - 18 - PAGE(21) - ... - PAGE(54) - 93 - **PAGE(5) -11 - PAGE(9)** .... Sk= PAGE(94) - 11 - PAGE(62) - 52- ... - **PAGE(5) - 42 - PAGE(9)** - 30 - PAGE(72) (3)

When the total number of sessions Sk exceeds a pre-set threshold (for example, it becomes more than 20), the collection of sessions is analyzed, identifying patterns. In this case, a repeating sequence of pages, similar to the PAGE(6) - PAGE(33) - PAGE(21) sequence selected in (3) shall be called the pattern term. The time intervals T(j) at the pattern identification step are not taken into account.

It is important that both all described and subsequent data transformations are always performed exactly for this particular user. Sessions from collections of different users are never analyzed together.

The length of the pattern, i.e. the number of pages opened sequentially that will be considered a pattern, is selected in advance. In one possible embodiment of the claimed method, the length of the pattern can be specified by an interval. For example, if the pattern length from 3 to 6 is specified, then the PAGE(6) - PAGE(33) - PAGE(21) pattern shown above, having a length of 3, matches the specified criteria, and the PAGE(5) - PAGE(9) pattern, having a length of 2, does not fit. In another embodiment, the length of the pattern can be pre-set by a fixed value, for example, 4.

In yet another possible embodiment, the length of the pattern can be automatically selected depending on the number of patterns identified for a given user. In this embodiment, the search for patterns begins, for example, at a given length of 3. If and when the number of patterns identified for a given user exceeds the threshold set with the system configuration (for example, more than 10 patterns were found), the pattern length is increased by one unit and the search is repeated, discarding the previously found short patterns. Such a cycle is performed until a number of patterns smaller than the threshold value having the maximum possible length is found.

There is a possible embodiment in which the preliminary modification of some of the found patterns is performed. During the modification, some patterns are assigned with additional a priori weights related to the assignment of interface windows included in these patterns.

Speaking of the "pattern weight", in this case we mean some kind of pre-set number associated with this pattern and stored in the system that implements the claimed method.

For example, patterns comprising the PAGE(m) window, which serves in the interface of the RBS system to request the transfer of funds to a bank account or to a wallet of a cashless payment system, can be assigned with an increased weight, for example, 3 times greater than the weight of other patterns.

This weight will be assigned to any patterns comprising the PAGE(m) window, no matter in which particular USER(i) user's sessions these patterns has been found.

Similarly, patterns comprising the PAGE(x) window, which serves to pay utility bills or taxes in the interface of the RBS system, can be assigned with a reduced weight, for example, 0.3 of the weight of unmodified patterns.

This specified weight can be used by a system that implements the method, both at the step of training classifiers described below, and at the step of controlling the user's identity. Such a weight makes sense when the system is sensitive to an event of a certain type. In this example, the atypical behavior of any user in a high-risk scenario, comprising PAGE(m) window, will "alarm" the system much more than atypical behavior in a tax payment scenario, where the probability of appearance of a violator taking over other people's credentials tends to zero.

A set of parameters, characterizing the behavior of this user when working with the RBS system, is calculated for each identified pattern. All parameters are calculated based on the same session collection.

The first parameter is a vector, which we will call the time vector V. This is a vector whose dimension corresponds to the number of time intervals within the given pattern. For example, for the PAGE(6) - PAGE(33) - PAGE(21) pattern, the time vector will be two-dimensional: $V = (Tavg1, Tavg2)$, where Tavg1 -- the time characteristic for a given user, calculated by a predetermined algorithm, between the opening of PAGE(6) and PAGE(33) windows, and Tavg2 between the opening of PAGE(33) and PAGE(21) windows.

To calculate Tavg1 and Tavg2, take all occurrences of this pattern found in all working sessions of a given user, and calculate these averaged values from the previously calculated values of time intervals T(j) between PAGE(6) and PAGE(33) pages, as well as between pages PAGE(33) and PAGE(21).

The averaging of time, for example, Tavg1, can be understood here as the arithmetic average of all times T1 for all occurrences of this pattern in the collection of sessions of a given user. In another embodiment, the geometric average of all occurrences of a given pattern can be calculated. There is a possible embodiment, where the weighted average is calculated, wherein the number of pages separating this interval from the initial interval T1 or from the final interval of this pattern is taken as the weight for each time period Ti. The meaning of the latter embodiment is that the greatest effect on Tavg should exert the intervals at the beginning or at the end of the session of a given user.

In another possible implementation, the time vector V has a dimension of 2*n, where n is the number of time intervals within a given pattern. In this case, the time vector stores both the calculated value of the time interval Tavg and the variance D. The variance here is an indicator of how profoundly Tavg can vary the duration of a particular time interval for a given user. Such vector of 2*n dimension might look as follows: $V = (Tavg1, D1, Tavg2, D2)$.

The dispersion of time intervals D1 can be calculated on the basis of the built collection of sessions of a given user as the variance Tavg1, or by any other well-known method. Similarly, the D2 dispersion can be calculated as the variance Tavg2.

In addition to the time vector, a frequency can also be calculated for each pattern, indicating how often this pattern occurs in the sessions of a given user. The frequency is the ratio of the number of occurrences of a given pattern L to the number of sessions of a given user K.

This parameter can be less than one if the pattern is not found in each session, or more, if the pattern occurs several times during each session.

$$\lambda = L/K \tag{4}$$

The patterns found and the parameters calculated for each of them are saved for use in further calculations.

Then, one or several decision rules (classifiers) are trained for each user, using his collection of data, first of all, a set of time vectors V. The technical embodiment of a classifier or classifiers can be any well-known one; they can be implemented, for example, as a probabilistic graphical model (Random Forest) or as an SVM classifier.

If when compiling a collection of patterns some patterns were assigned with elevated and/or reduced weights, associated with the appointment of one or more of the RBS system interface windows included in the pattern, then these weights can be taken into account when choosing or training a classifier or classifiers such that the corresponding patterns exerted a proportionately greater or lesser effect on the final decision. In a similar way, frequency can also be used at this step as an increasing or decreasing factor.

In one of the possible implementations of the claimed method, one classifier can be trained on the calculated values of the averaged time intervals, and the second on the calculated values of the dispersion of the time intervals.

All the above actions, starting with saving pairs of {USER(i), PAGE(j)} identifiers and their corresponding time stamps t, and ending with training classifiers for a given user, can be performed online directly during the operation of the RBS service.

In another possible embodiment, the system implementing the claimed method can be pretrained offline. In this embodiment, the system receives an array of data previously saved by the RBS service for analysis, performs data analysis as described above, trains classifiers for all users whose identifiers were in the received data array. When the analysis is completed and the classifiers are trained, the system implementing this method is transferred to the online mode and then functions together with the RBS service.

The application of a trained classifier or classifiers can look as follows. The system that implements the method sorts the data coming from the RBS service according to USER(i) and forms user sessions (working sessions of specific users). From the very beginning of the session, as soon as the very first USER(i) is received, a classifier or classifiers trained on the pattern collection of the user corresponding to this USER (i) are selected and launched. All data from the current user working session is supplied to the input of the classifier or classifiers. Thus, the system that implements the claimed method conducts the analysis of the user's identity directly during the work of this user with the RBS service.

The decision of a classifier or classifiers is a numerical estimate of the probability that the very same user entered the RBS system under the USER(i), on the collection of patterns of which the classifier or classifiers were trained. This decision is constantly updated during the working session of a given user, i.e. the decision of the classifier or classifiers is revised upon receipt of each regular {USER(i), PAGE(j)} pair.

The decisions of each classifier come to the antifraud system of the bank, where they can be used to generate alarm messages that have meaning of a warning about the atypical behavior of a particular USER(i) user, or other signals of a similar purpose.

In those embodiments of the claimed method, which do not involve the presence of an antifraud system (for example, an online store, a web service for collaboration, a multiplayer computer game), the decisions of the trained classifiers can be supplied into the access control system used by this service or site, to the computer workstation panel of the service moderator or information security specialist, or used by the system software to take actions preventing illegal access to the system. For example, to initiate a direct connection with a given user and request further identifying information (control question, phone number, and so on).

In one of the possible embodiments of this method, such a signal can be formed if there are no typical patterns for the pre-set number of pages opened by the user, i.e. when a given user behaves atypically long enough.

It is also possible embodiment of the system, in which the condition for the formation of an alarm is the absence for a pre-set time of at least one pattern that has the highest frequency of all the patterns of a given user.

The claimed method can be implemented in any embodiment of the authorized remote access service, which implies the presence of several user interface windows or the presence of several working zones in one complex user interface window and various possible methods to switch between them (both windows and zones).

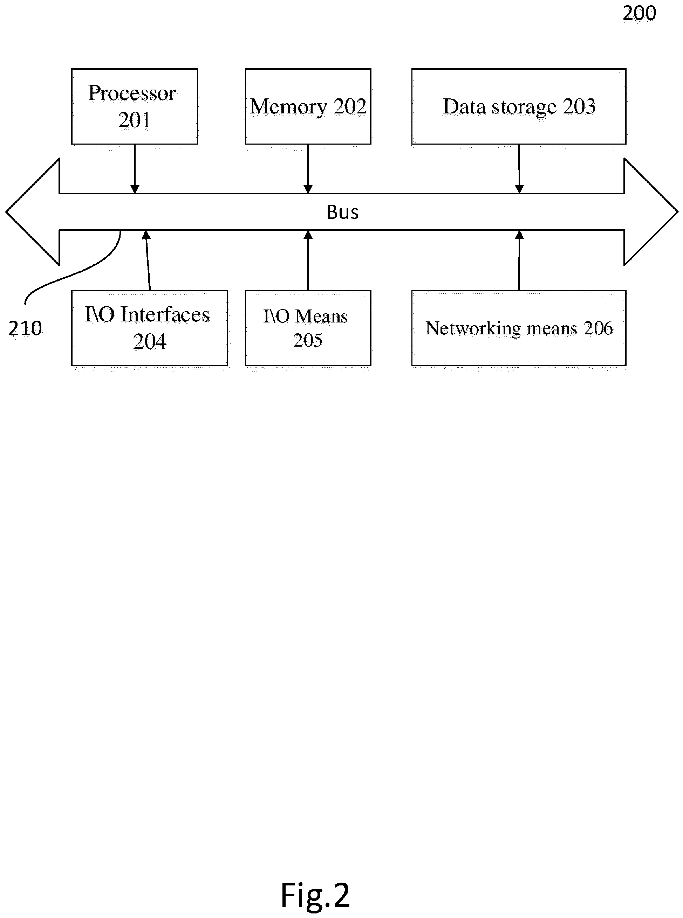

An overall schematic of a computer device (200) that provides the data processing necessary for the implementation of the claimed solution will be presented in Fig. 2.

In general, the device (200) comprises such components as: one or more processors (201), at least one memory (202), data storage means (203), input/output interfaces (204), I/O means (205), networking means (206).

The processor (201) of the device performs the basic computational operations necessary for the operation of the device (200) or the functionality of one or more of its components. The processor (201) runs necessary machine-readable commands comprised in the RAM (202).

The memory (202) typically is made in the form of RAM and comprises the necessary program logic that provides the required functionality.

The data storage means (203) can be made in the form of HDD, SSD disks, RAID array, network storage, flash memory, optical information storage devices (CD, DVD, MD, Blue-Ray disks), etc. The means (203) allows long-term storage of various types of information, for example, the aforementioned files with user data sets, a database comprising records of time intervals measured for each user, user identifiers, etc.

The interfaces (204) are standard means for connecting and working with a computer device, such as USB, RS232, RJ45, LPT, COM, HDMI, PS/2, Lightning, FireWire, etc.

The choice of the interfaces (204) depends on the specific design of the device (200), which can be a personal computer, mainframe, server cluster, thin client, smartphone, laptop, be part of a banking terminal, ATM, etc.

As the means of data I/O (205), a mouse, a joystick, a display (touch screen), a projector, a touchpad, a keyboard, a trackball, a light pen, speakers, a microphone, etc. can be used.

The networking means (206) are selected from the device that provides network reception and transmission of data, for example, Ethernet card, WLAN/Wi-Fi module, Bluetooth module, BLE module, NFC module, IrDa, RFID module, GSM modem, etc. With the use of the means (205), the data exchange via wired or wireless data transmission channel, for example, WAN, PAN, LAN (LAN), Intranet, Internet, WLAN, WMAN or GSM is provided.

The components of the device (200) are interfaced by means of a common data transfer bus (210).

These application materials present the preferred disclosure of the implementation of the claimed technical solution, which should not be used as limiting other, private embodiments of its implementation that do not go beyond the requested scope of legal protection and are obvious to specialists in the relevant technical field.

**Claims**

1. A method of user identification by sequence of opened user interface windows, performing using a computing device, the method comprising:

   - registering user credentials in the system;
   - assigning an appropriate credential user ID;
   - assigning an identifier to each user interface window opened by user;
   - throughout the working session of the identified user, recording sequence of opened user interface windows, wherein:

     • saving identifier of window, which is currently opened by the user, and opening time of window;
     • with each transition to a new user interface window, saving identifier of this window and time when it was open;

   - accumulating a pre-set number of working sessions of the user;
   - analyzing the accumulated data, notably, identifying the repeating sequences of the visited user interface windows (patterns);
   - calculating a set of parameters characterizing the time elapsed between the transitions of a given user from one user interface window to another user interface window for each identified pattern;
   - saving the specified number of patterns of a given user and, on the basis of the set of parameters calculated for each pattern, training at least one classifier to identify a given user by the sequence of visited pages;
   - applying at least one classifier, that was trained, to further confirm the identity of the user, during the working sessions of which at least one classifier was trained,
   **characterized in that** the set of parameters calculated for each pattern includes the time elapsed between the transitions of a given user from one user interface window to another user interface window and averaged over all working sessions of the given user in which this pattern is encountered,
   wherein the averaged time elapsed is calculated as a weighted average, and wherein a number of pages separating the interval from the initial interval or the final interval of the pattern is taken as the weight for each time period.

2. The method of claim 1, wherein the user interface windows are web pages.

3. The method of claim 1, wherein the identified patterns are additionally selected such that their length and number satisfy the pre-set criteria, and the sets of parameters are calculated only for the selected patterns.

**4.** The method of claim 3, wherein patterns with the maximum possible length are selected, and their number should be no more and no less than pre-set values.

**5.** The method of claim 1, wherein patterns comprising pre-defined user interface windows can be assigned with a priori weights which are taken into account when choosing or training at least one classifier such that the corresponding patterns exerted a proportionally greater or lesser effect on the final decision of at least one classifier.

**6.** The method of claim 1, wherein the set of parameters calculated for each pattern further includes the dispersion, calculated as the variance, for the time intervals between the transitions of the given user from one user interface window to another user interface window.

**7.** The method of claim 1, wherein the set of parameters calculated for each pattern further includes the frequency of this pattern in the working sessions of the given user.

**8.** The method of claim 7, wherein the frequency is taken into account when choosing or training at least one classifier such that patterns with a higher frequency exerted a proportionally greater effect on the final decision of at least one classifier.

**9.** The method of claim 1, wherein the classifier is trained by the method of machine learning.

**10.** The method of claim 9, wherein the classifier can be implemented as a probabilistic graphical model or as an SVM classifier.

**11.** A system of user identification by sequence of visited user interface windows, the system comprising:

- unit for registration of user credentials in the system;
- system clock configured to tag time;
- unit for identification of the current user interface window;
- long-term memory configured to store the database;
- computing device configured to perform the method according to any of claims 1-10.

**12.** The system of claim 11, wherein the system of user identification by sequence of visited user interface windows is an integral part of a remote banking service system.

**13.** The system of claim 11, wherein the system of user identification by sequence of visited user interface windows is an integral part of a website, which involves user authorization.

**14.** The system of claim 11, wherein the system of user identification by sequence of visited user interface windows is an integral part of a multiplayer computer game, which involves user authorization.

**15.** The system of claim 11, wherein the system of user identification by sequence of visited user interface windows is an integral part of a software and hardware system for collaboration, which involves user authorization.

**Patentansprüche**

**1.** Verfahren zur Benutzeridentifikation durch eine Sequenz von geöffneten Benutzeroberflächen-Fenstern, das mit einem Computer durchgeführt wird, wobei das Verfahren aufweist:

- Registrieren von Benutzeranmeldeinformationen im System;
- Zuweisen einer geeigneten Anmelde-ID;
- Zuweisen eines Identifikators zu jedem vom Benutzer geöffneten Benutzeroberflächen-Fenster;
- Während der Arbeitssitzung des identifizierten Benutzers, Aufzeichnen der Sequenz der geöffneten Benutzeroberflächen-Fenster, wobei:

der Identifikator des Fensters, das gerade vom Benutzer geöffnet ist, und die Öffnungszeit des Fensters gespeichert werden;
bei jedem Wechsel zu einem neuen Benutzeroberflächen-Fenster der Identifikator dieses Fensters und die Zeit, zu der es geöffnet wurde, gespeichert werden;

- Ansammeln einer vorgegebenen Anzahl von Arbeitssitzungen des Benutzers;
- Analysieren der gesammelten Daten, insbesondere Identifizieren der sich wiederholenden Sequenzen der besuchten Benutzeroberflächen-Fenster (Muster);
- Berechnen eines Satzes von Parametern, die die Zeit charakterisieren, die zwischen den Übergängen eines bestimmten Benutzers von einem Benutzeroberflächen-Fenster zu einem anderen Benutzeroberflächen-Fenster für jedes identifizierte Muster vergeht;
- Speichern der spezifizierten Anzahl von Mustern eines bestimmten Benutzers und basierend auf dem Satz von Parametern, die für jedes Muster berechnet wurden, mindestens einen Klassifikator trainieren, um einen bestimmten Benutzer durch die Sequenz der besuchten Seiten zu identifizieren;
- Anwenden von mindestens einem trainierten Klassifikator, um die Identität des Benutzers während der Arbeitssitzungen weiter zu bestätigen, in denen mindestens ein Klassifikator trainiert wurde,

**dadurch gekennzeichnet, dass** der Satz von Parametern, der für jedes Muster berechnet wird, die Zeit umfasst, die zwischen den Übergängen eines bestimmten Benutzers von einem Benutzeroberflächen-Fenster zu einem anderen Benutzeroberflächen-Fenster vergeht und über alle Arbeitssitzungen des bestimmten Benutzers, in denen dieses Muster auftritt, gemittelt wird, wobei die gemittelte verstrichene Zeit als gewichteter Durchschnitt berechnet wird und wobei die Anzahl der Seiten, die das Intervall vom Anfangsintervall oder dem Endintervall des Musters trennen, als Gewicht für jeden Zeitraum genommen wird.

2. Verfahren nach Anspruch 1, wobei die Benutzeroberflächen-Fenster Webseiten sind.

3. Verfahren nach Anspruch 1, wobei die identifizierten Muster zusätzlich so ausgewählt werden, dass ihre Länge und Anzahl die vorgegebenen Kriterien erfüllen und die Sätze von Parametern nur für die ausgewählten Muster berechnet werden.

4. Verfahren nach Anspruch 3, wobei Muster mit der maximal möglichen Länge ausgewählt werden und deren Anzahl nicht mehr und nicht weniger als vorgegebene Werte sein sollte.

5. Verfahren nach Anspruch 1, wobei Mustern, die vordefinierte Benutzeroberflächen-Fenster umfassen, a priori Gewichte zugewiesen werden können, die bei der Auswahl oder dem Training von mindestens einem Klassifikator berücksichtigt werden, so dass die entsprechenden Muster einen proportional größeren oder kleineren Einfluss auf die endgültige Entscheidung von mindestens einem Klassifikator haben.

6. Verfahren nach Anspruch 1, wobei der Satz von Parametern, der für jedes Muster berechnet wird, zusätzlich die Streuung, berechnet als Varianz, für die Zeitintervalle zwischen den Übergängen des bestimmten Benutzers von einem Benutzeroberflächen-Fenster zu einem anderen Benutzeroberflächen-Fenster umfasst.

7. Verfahren nach Anspruch 1, wobei der Satz von Parametern, der für jedes Muster berechnet wird, zusätzlich die Häufigkeit dieses Musters in den Arbeitssitzungen des bestimmten Benutzers umfasst.

8. Verfahren nach Anspruch 7, wobei die Häufigkeit bei der Auswahl oder dem Training von mindestens einem Klassifikator berücksichtigt wird, so dass Muster mit einer höheren Häufigkeit einen proportional größeren Einfluss auf die endgültige Entscheidung von mindestens einem Klassifikator haben.

9. Verfahren nach Anspruch 1, wobei der Klassifikator nach dem Verfahren des maschinellen Lernens trainiert wird.

10. Verfahren nach Anspruch 9, wobei der Klassifikator als probabilistisches grafisches Modell oder als SVM-Klassifikator implementiert werden kann.

11. System zur Benutzeridentifikation durch die Sequenz der besuchten Benutzeroberflächen-Fenster, wobei das System umfasst:

- eine Einheit zur Registrierung der Benutzeranmeldeinformationen im System;
- eine Systemuhr, die so konfiguriert ist, dass sie die Zeit markiert;
- eine Einheit zur Identifikation des aktuellen Benutzeroberflächen-Fensters;
- einen Langzeitspeicher, der so konfiguriert ist, dass er die Datenbank speichert;

- ein Computer, der so konfiguriert ist, dass es das Verfahren gemäß einem der Ansprüche 1 bis 10 ausführt.

**12.** System nach Anspruch 11, wobei das System zur Benutzeridentifikation durch die Sequenz der besuchten Benutzeroberflächen-Fenster ein integraler Bestandteil eines Remote-Banking-Dienstsystems ist.

**13.** System nach Anspruch 11, wobei das System zur Benutzeridentifikation durch die Sequenz der besuchten Benutzeroberflächen-Fenster ein integraler Bestandteil einer Website ist, die eine Benutzerautorisierung beinhaltet.

**14.** System nach Anspruch 11, wobei das System zur Benutzeridentifikation durch die Sequenz der besuchten Benutzeroberflächen-Fenster ein integraler Bestandteil eines Multiplayer-Computerspiels ist, das eine Benutzerautorisierung beinhaltet.

**15.** System nach Anspruch 11, wobei das System zur Benutzeridentifikation durch die Sequenz der besuchten Benutzeroberflächen-Fenster ein integraler Bestandteil eines Software- und Hardware-Systems zur Zusammenarbeit ist, das eine Benutzerautorisierung beinhaltet.

**Revendications**

**1.** Procédé d'identification d'utilisateur par séquence de fenêtres d'interface utilisateur ouvertes, réalisé à l'aide d'un dispositif informatique, le procédé comprenant :

- l'inscription d'accréditations d'utilisateur dans le système ;
- l'attribution d'un identifiant d'utilisateur d'accréditation approprié ;
- l'attribution d'un identifiant à chaque fenêtre d'interface utilisateur ouverte par un utilisateur ;
- pendant toute la session de travail de l'utilisateur identifié, l'enregistrement d'une séquence de fenêtres d'interface utilisateur ouvertes, dans lequel :

• la sauvegarde d'un identifiant de fenêtre, qui est actuellement ouverte par l'utilisateur, et du temps d'ouverture de fenêtre ;
• avec chaque transition à une nouvelle fenêtre d'interface utilisateur, la sauvegarde d'un identifiant de cette fenêtre et du temps d'ouverture de fenêtre ;

- le cumul d'un nombre prédéfini de sessions de travail de l'utilisateur ;
- l'analyse des données cumulées, en particulier l'identification des séquences répétées des fenêtres d'interface utilisateur visitées (motifs) ;
- le calcul d'un ensemble de paramètres caractérisant le temps écoulé entre les transitions d'un utilisateur donné d'une fenêtre d'interface utilisateur à une autre fenêtre d'interface utilisateur pour chaque motif identifié ;
- la sauvegarde du nombre spécifié de motifs d'un utilisateur donné et, sur la base de l'ensemble de paramètres calculé pour chaque motif, l'entraînement d'au moins un classificateur pour identifier un utilisateur donné par la séquence de pages visitées ;
- l'application d'au moins un classificateur, qui a été entraîné, pour confirmer en outre l'identité de l'utilisateur, pendant les sessions de travail avec lesquelles l'au moins un classificateur a été entraîné,
**caractérisé en ce que** l'ensemble de paramètres calculé pour chaque motif comprend le temps écoulé entre les transitions d'un utilisateur donné d'une fenêtre d'interface utilisateur à une autre fenêtre d'interface utilisateur et moyenné sur toutes les sessions de travail de l'utilisateur donné dans lesquelles ce motif est rencontré,
dans lequel le temps moyenné écoulé est calculé en tant qu'une moyenne pondérée, et dans lequel un nombre de pages séparant l'intervalle de l'intervalle initial ou de l'intervalle final du motif est pris en tant que le poids de chaque période de temps.

**2.** Procédé selon la revendication 1, dans lequel les fenêtres d'interface utilisateur sont des pages Web.

**3.** Procédé selon la revendication 1, dans lequel les motifs identifiés sont de plus sélectionnés de sorte que leur longueur et leur nombre satisfassent les critères prédéfinis, et les ensembles de paramètres sont calculés uniquement pour les motifs sélectionnés.

**4.** Procédé selon la revendication 3, dans lequel des motifs avec la longueur possible maximale sont sélectionnés, et leur nombre ne doit être ni supérieur ni inférieur à des valeurs prédéfinies.

**5.** Procédé selon la revendication 1, dans lequel il peut être attribué, à des motifs comprenant des fenêtres d'interface utilisateur prédéfinies, des poids a priori qui sont pris en compte lors du choix ou de l'entraînement d'au moins un classificateur de sorte que les motifs correspondants aient un effet proportionnellement plus grand ou plus petit sur la décision finale d'au moins un classificateur.

**6.** Procédé selon la revendication 1, dans lequel l'ensemble de paramètres calculé pour chaque motif comprend en outre la dispersion, calculée en tant que la variance, pour les intervalles de temps entre les transitions de l'utilisateur donné d'une fenêtre d'interface utilisateur à une autre fenêtre d'interface utilisateur.

**7.** Procédé selon la revendication 1, dans lequel l'ensemble de paramètres calculé pour chaque motif comprend en outre la fréquence de ce motif dans les sessions de travail de l'utilisateur donné.

**8.** Procédé selon la revendication 7, dans lequel la fréquence est prise en compte lors du choix ou de l'entraînement d'au moins un classificateur de sorte que des motifs avec une plus grande fréquence aient un effet proportionnellement plus grand sur la décision finale d'au moins un classificateur.

**9.** Procédé selon la revendication 1, dans lequel le classificateur est entraîné par le procédé d'apprentissage automatique.

**10.** Procédé selon la revendication 9, dans lequel le classificateur peut être mis en œuvre en tant qu'un modèle graphique probabiliste ou en tant qu'un classificateur SVM.

**11.** Système d'identification d'utilisateur par séquence de fenêtres d'interface utilisateur visitées, le système comprenant :

- une unité pour l'inscription d'accréditations d'utilisateur dans le système ;
- une horloge de système configurée pour consigner le temps ;
- une unité pour l'identification de la fenêtre d'interface utilisateur courante ;
- une mémoire à long terme configuré pour stocker la base de données ;
- un dispositif informatique configuré pour réaliser le procédé selon l'une quelconque des revendications 1 à 10.

**12.** Système selon la revendication 11, dans lequel le système d'identification d'utilisateur par séquence de fenêtres d'interface utilisateur visitées fait partie intégrante d'un système de service bancaire à distance.

**13.** Système selon la revendication 11, dans lequel le système d'identification d'utilisateur par séquence de fenêtres d'interface utilisateur visitées fait partie intégrante d'un site Web qui implique une autorisation d'utilisateur.

**14.** Système selon la revendication 11, dans lequel le système d'identification d'utilisateur par séquence de fenêtres d'interface utilisateur visitées fait partie intégrante d'un jeu informatique multijoueur qui implique une autorisation d'utilisateur.

**15.** Système selon la revendication 11, dans lequel le système d'identification d'utilisateur par séquence de fenêtres d'interface utilisateur visitées fait partie intégrante d'un système logiciel et matériel de collaboration qui implique une autorisation d'utilisateur.

100

Fig.1

200

| Processor 201 | Memory 202 | Data storage 203 |

Bus

210

| I\O Interfaces 204 | I\O Means 205 | Networking means 206 |

# Fig.2

**EP 3 842 966 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017032250 A1
- CN 106355450 A
- CN 106202482 A
- RU 2649793 C1
- US 2017221064 A
- CN 108510280
- US 9185095 B